# EUROPÄISCHE PATENTANMELDUNG

(11) **EP 3 536 983 A1**
(43) Veröffentlichungstag der Anmeldung: **11.09.2019**
(21) Anmeldenummer: 19160716.7
(22) Anmeldetag: 05.03.2019
(51) Int. Cl.: F16B 1/00, F16B 5/02, F16B 39/282

(54) **ABSTANDSELEMENT MIT VERSTELLBARER LÄNGE**

(30) Priorität: 08.03.2018 AT 501972018
(71) Anmelder: Artweger GmbH & Co. KG, 4820 Bad Ischl (AT)
(72) Erfinder: Zierler, Wolfgang, 4820 Bad Ischl (AT); Spielbüchler, Robert, 4820 Bad Ischl (AT)
(74) Vertreter: Patentanwälte Pinter & Weiss OG

(57) **Zusammenfassung**

Um eine sichere Einstellung einer festen Länge eines Abstandselements (3) zu ermöglichen, ist bei einer Drehbewegung eines Einstellschlüssels (1) über das Zusammenwirken eines Magnets (M1) des Einstellschlüssel (1) und eines Gegenmagnets (M2) eines Drehelements (2) über ein Stellorgan (6) die Länge (d) des Abstandselements (3) in Richtung der axialen Drehachse verringerbar oder vergrößerbar. Erfindungsgemäß ist im Abstandselement (3) ein Blockierelement (23) vorgesehen, das von einer Verriegelungsstellung (V) in eine Entriegelungsstellung (E) bringbar ist, wobei in der Verriegelungsstellung (V) ein Verdrehen eines Stellorgans (6) verhindert ist und in der Entriegelungsstellung (E) ein Verdrehen des Stellorgans (6) ermöglicht ist.

## Beschreibung

Die gegenständliche Erfindung behandelt eine Vorrichtung zur Verstellung der Länge eines Abstandselements, aufweisend einen Einstellschlüssel und ein Drehelement, wobei der Einstellschlüssel zumindest einen Magnet aufweist und das Drehelement zumindest einen Gegenmagnet aufweist, wobei der zumindest eine Magnet und der zumindest eine Gegenmagnet angeordnet sind um die Übertragung der Drehbewegung des Einstellschlüssels auf das Drehelement durch das Zusammenwirken des Magnets und des Gegenmagnets zu ermöglichen, und wobei das Drehelement als Mitnehmer für ein Stellorgan des Abstandselements ausgebildet ist, wobei durch Verdrehen des Stellorgans mit dem Drehelement in eine erste Richtung die Länge des Abstandselements in Richtung der axialen Drehachse vergrößerbar ist und durch Verdrehen des Stellorgans mit dem Drehelement in eine zweite Richtung die Länge des Abstandselements in Richtung der axialen Drehachse verringerbar ist. Weiters betrifft die gegenständliche Erfindung ein höhenverstellbares Bodenelement für eine Feuchtraumeinrichtung mit zumindest einer erfindungsgemäßen Vorrichtung und eine Schablone zur Positionierung eines Einstellschlüssels.

Um eine Position eines Elements, beispielsweise einer Abdeckung, zu verändern oder zu fixieren, werden oftmals Stellschrauben verwendet. Die Neigung einer Bodenplatte, beispielsweise einer Duschwanne, muss justierbar sein, damit eine Niveauanpassung, z.B. für den Abfluss von Duschwasser, ermöglicht wird. Eine Möglichkeit, die Bodenplatte zu fixieren, wäre natürlich eine Vorjustierung von Abstandshaltern, woraufhin die Bodenplatte eingelegt wird, indem es auf den Abstandshaltern platziert wird. Diese Methode erfordert jedoch eine passgenaue Einstellung der Abstandshalter vor dem Platzieren der Bodenplatte, was mühsam und aufwendig ist. Wenn wie üblich vier Abstandshalter, d.h. einer pro Ecke einer rechteckigen Bodenplatte, angebracht sind, so kann es bei ungenauer Justierung leicht zu einem Wackeln der Bodenplatte kommen. Auch wenn aufgrund passgenauer Justierung ein Wackeln vermieden werden konnte, so könnte es im Nachhinein erforderlich sein, die Neigung des Duschbodens nach zu justieren, beispielsweise um den optimalen Abfluss von Duschwasser zu ermöglichen. Es ist oftmals üblich aufgrund einer gewünschten stabilen Positionierung einer Bodenplatte auch mehr als vier Abstandshalter zu verwenden. Insbesondere drei Abstandshalter sind nicht ausreichend, da die Bodenplatte schaukeln oder sich bei Belastung in den Randbereichen auch verbiegen kann. Bei der soeben beschriebenen Lösung müsste zudem für jede (Neu)Einstellung der Abstandshalter die Bodenplatte herausgenommen werden. Alleine das Herausnehmen einer festsitzenden Bodenplatte an sich erweist sich oftmals bereits als schwierig. Zudem bedeutet das Herausnehmen der Bodenplatte, darauffolgende Nachjustierungen und das Neueinsetzen der Bodenplatte einen hohen Aufwand durch unnötige sich wiederholende Arbeitsschritte.

Will man nun einen Zugriff auf die Stellschrauben von außen ermöglichen, entstehen naturgemäß Spalten, Ritzen und dergleichen an der Oberfläche des Elements. Wünschenswert ist somit die Vermeidung von sichtbaren Stellschrauben, insbesondere im Bereich der Hygiene, da durch entstehende Spalten, Ritzen, etc. ein Ansammeln von Schmutz und Bakterien an dem Element ermöglicht wird und die Dichtheit des zu verstellenden Elements, also der Bodenplatte, oft nicht gewährleistet werden kann. Somit wäre eine glatte, homogene Oberfläche der Bodenplatte wünschenswert.

Die US 9,190,198 B2 offenbart eine Vorrichtung zum Fixieren von Schrauben als Drehelemente, wobei ein magnetischer Einstellschlüssel verwendet wird, um durch eine nichtmagnetische Abdeckung magnetische Schrauben zu fixieren. Damit wird es ermöglicht Schrauben zu fixieren, ohne von den Schrauben hervorgerufene, von außen sichtbare, Spalten zu erzeugen. Damit wird jedoch lediglich eine Fixierung und keine Einstellung einer Abdeckung ermöglicht, was im Bereich elektronischer Geräte sinnvoll sein mag, jedoch für die Montage einer Bodenplatte nicht zufriedenstellend ist. Dabei ist der Magnetabstand der Magnete des Einstellschlüssels und der Schrauben nicht konstant. Die AT 518 276 B1 offenbart eine Vorrichtung zur Verstellung der Länge eines Abstandselements, mittels eines Einstellschlüssels welcher über eine Magnetkraft auf ein Drehelement wirkt und es ermöglicht über ein Drehen des Einstellschlüssels die Länge des Abstandselements zu verändern. Dabei ist keine direkte Berührung zwischen Einstellschlüssel und Drehelement erforderlich, wodurch eine Einstellung der Länge auch durch zwischen Einstellschlüssel und Drehelement liegende nichtmagnetische Stoffe hindurch, beispielsweise einer Platte, erfolgen kann. Jedoch ist dabei nicht auszuschließen, dass die Länge des Abstandselements nach einer Justierung, insbesondere durch einen Druck auf das Abstandselement verstellt, insbesondere verringert, wird.

Es ist somit die Aufgabe der gegenständlichen Erfindung, eine Vorrichtung anzugeben, die eine sichere Einstellung einer festen Länge eines Abstandselements ermöglicht.

Diese Aufgabe wird erfindungsgemäß gelöst, indem ein Blockierelement vorgesehen ist, das von einer Verriegelungsstellung in eine Entriegelungsstellung bringbar ist, wobei in der Verriegelungsstellung ein Verdrehen des Stellorgans zumindest in die zweite Richtung und/oder die erste Richtung verhindert ist und in der Entriegelungsstellung ein Verdrehen des Stellorgans in die zweite Richtung und/oder die erste Richtung ermöglicht ist. Damit kann ein unbeabsichtigtes Verstellen der Länge des Abstandselements verhindert werden. Ein Verdrehen des Stellorgans in die zweite Richtung würde ein Verringern der Länge bedeuten, ein Verdrehen des Stellorgans in die erste Richtung eine Vergrößerung der Länge. So kann durch das vorgesehene Blockierelement wenn es sich in der Verriegelungsstellung befindet also je nach Ausführung ein Verringern und/oder ein Vergrößern der Länge des Abstandselements verhindert werden. Das Blockierelement kann dabei auf beliebige Art ausgeführt sein, sofern es in die oben beschriebene Verriegelungsstellung und Entriegelungsstellung bringbar ist.

Vorteilhafterweise ist das Drehelement über eine formschlüssige Verbindung mit dem Stellorgan verbunden, womit die Übertragung der Drehbewegung von Drehelement auf Stellorgan sichergestellt wird. Die formschlüssige Verbindung kann beispielsweise durch eine Nut und eine zugehörige Feder gebildet werden. Dabei kann sich die Nut bzw. die Feder natürlich jeweils am Stellorgan oder dem Drehelement befinden.

Das Blockierelement kann durch auf dem Drehelement in radialer Richtung verlaufende Vertiefungen und/oder Erhöhungen ausgeführt sein, wobei zudem am Abstandselement ein Eingriffselement vorgesehen ist und das Blockierelement in der Verriegelungsstellung mit dem Eingriffselement in Eingriff steht. Das bedeutet natürlich, dass in der Entriegelungsstellung das Blockierelement nicht mit dem Eingriffselement in Eingriff steht. Das Eingriffselement kann dabei ortsfest an einem Bestandteil des Abstandselements angebracht sein um durch den Eingriff des Eingriffselements mit dem Blockierelement eine Verdrehung des Stellorgans in die erste und/oder zweite Richtung zu verhindern. "Ortsfest" bedeutet hier, dass das Eingriffselement nicht mit dem Drehelement mitgedreht wird. Das Eingriffselement kann ebenso aus einer oder mehreren Erhebungen bzw. Vertiefungen geformt sein, die in der Verriege-lungsstellung mit zumindest einem Teil des Blockierelements in Eingriff stehen.

Zudem kann das Abstandselement eine Gewindehülse mit einem Innengewinde aufweisen, die auf ein Außengewinde des Stellorgans aufgeschraubt ist, wodurch die Gewindestellung von Innengewinde und Außengewinde die Länge des Abstandselements ändert. Es ist natürlich auch vorstellbar, die Gewindehülse mit einem Außengewinde und das Stellorgan mit einem Innengewinde zu versehen, was die Konstruktion des Abstandselements jedoch erschwert. Das Innengewinde und/oder das Außengewinde können/kann natürlich mit einem Anschlag versehen sein, der verhindert, dass die Gewindehülse, z.B. irrtümlich, ganz vom Stellorgan abgeschraubt wird.

Vorteilhafterweise ist das Eingriffselement an der Gewindehülse angebracht. Das ist natürlich nur sinnvoll, wenn die Gewindehülse ortsfest ist, d.h. sich nicht mit dem Drehelement mit dreht. So kann in der Verriegelungsstellung über den Eingriff des Eingriffselements mit dem Blockierelement eine Verdrehung des Stellorgans in die erste und/oder zweite Richtung verhindert werden. Hier ist es besonders vorteilhaft, wenn das Eingriffselement aus einem oder mehreren Erhebungen bzw. Vertiefungen geformt ist. Die Gewindehülse kann weiters auf einer dem Einstellschlüssel zugewandten Oberseite eine Öffnung aufweisen in die das Drehelement eingeführt ist. Dies ist insbesondere vorteilhaft, wenn eine formschlüssige Verbindung zwischen Drehelement und Stellorgan vorliegt und das Stellorgan ein Außengewinde aufweist. Die Gewindehülse kann dabei als ein Teil oder auch mehrteilig, vorzugsweise zweiteilig, gefertigt sein.

Das Blockierelement kann durch auf dem Drehelement in radialer Richtung verlaufende Sägezähne mit in tangentialer Richtung steigenden Flanken gebildet sein. Da die erste Richtung und die zweite Richtung als tangentiale Richtung angesehen werden, kann je nach Orientierung der Sägezähne bei passender Ausgestaltung des Eingriffselements somit in der Verriegelungsstellung ein Verdrehen in die erste Richtung oder die zweite Richtung verhindert werden.

Sind die Flanken der Sägezähne in zweiter Richtung steigend ausgebildet, so kann in der Verriegelungsstellung das Verdrehen des Stellorgans in die zweite Richtung, d.h. ein Verkürzen der Länge des Abstandselements, verhindert werden.

Sind die Flanken der Sägezähne in erster Richtung steigend ausgebildet, so kann in der Verriegelungsstellung das Verdrehen des Stellorgans in die erste Richtung, d.h. ein Verlängern der Länge des Abstandselements verhindert werden.

Vorteilhafterweise kann das Blockierelement durch das Einwirken einer axialen Kraft auf das Drehelement in die Verriegelungsstellung gebracht werden und durch das Einwirken einer axialen, der Kraft entgegen wirkenden, Gegenkraft in die Entriegelungsstellung gebracht werden.

Es kann die Erdgraviation als Kraft dienen und die Gegenkraft durch ein Magnetfeld zwischen dem zumindest einen Magnet und dem zumindest einen Gegenmagnet erzeugt werden. Es wäre natürlich auch vorstellbar die Kraft beispielsweise durch ein Federelement zu erzeugen und die Gegenkraft durch das Magnetfeld zu erzeugen, usw. Ist nicht die Erdgravitation als Kraft vorgesehen, so ist auch eine nicht senkrechte Ausrichtung des Abstandselements möglich.

Vorteilhafterweise ist das Drehelement durch Einwirken der Kraft bzw. Gegenkraft im Abstandselement axial bewegbar um das Blockierelement in die Verriegelungsstellung bzw. Entriegelungsstellung zu bringen. Dies ist besonders vorteilhaft, wenn das Drehelement über eine Nut-Feder-Verbindung mit dem Stellorgan verbunden ist und die Gewindehülse auf der dem Einstellschlüssel zugewandten Oberseite eine Öffnung aufweist, in die das Drehelement eingeführt ist. In dieser Ausgestaltung ist also das Drehelement durch Einwirken der Kraft bzw. Gegenkraft in der Gewindehülse axial bewegbar.

Weiters kann die Gewindehülse zumindest ein Montageelement aufweisen an das eine in der Höhe zu verstellende Platte anbringbar ist, sodass die Platte zwischen dem zumindest einen Montageelement und Einstellschlüssel angebracht ist. Die Anbringung der Platte an die Montageelemente kann beispielsweise durch Schrauben oder Bolzen oder einen Kleber erfolgen. Damit wird die Gewindehülse in einer ortsfesten Position gehalten, was besonders vorteilhaft ist, wenn das Eingriffselement an der Gewindehülse angebracht ist, da damit das Eingriffselement ebenso in einer ortsfesten Position gehalten wird. Die höhenverstellbare Platte kann damit einen konstanten Abstand zwischen dem Einstellschlüssel und der Gewindehülse verursachen. Ist das Stellorgan im Abstandselement axial verschiebbar um das Stellorgan samt Blockierelement in die Verriegelungsstellung bzw. in die Entriegelungsstellung zu bringen und wird als Kraft die Erdgravitation und als Gegenkraft die Magnetkraft verwendet, so muss natürlich dafür gesorgt werden, dass das Stellorgan samt Blockierelement bei Anlegen des Einstellschlüssels mittels der Magnetkraft von der Verriegelungsstellung in die Entriegelungsstellung gebracht werden kann. Sobald der Einstellschlüssel nicht mehr anliegt, wirkt die Magnetkraft zwischen Magneten und Gegenmagneten nicht mehr, das Stellorgan wird aufgrund der Erdgravitation als Kraft axial verschoben, womit das Blockierelement in die Verriegelungsstellung fällt und daraufhin mit dem Eingriffselement in Eingriff steht. In dieser Position ist ein Verdrehen des Stellorgans je nach Ausgestaltung in die erste und/oder zweite Richtung nicht möglich. In dieser Ausgestaltung muss bei der Konstruktion des Montageelements ein besonderes Augenmerk auf die Position und Stärke der Magnete und Gegenmangete, sowie des Spiels des Blockierelements zwischen Verriegelungsposition und Entriegelungsposition gelegt werden um eine "Betätigung" des Blockierelements zu ermöglichen. Es muss nämlich weiters nicht nur die Dicke der Platte (und die Position der Magnete an Einstellschlüssel und der Gegenmagnete am Drehelement) so gewählt werden, dass ein für eine Übertragung der Drehbewegung ausreichendes magnetisches Feld zwischen den Gegenmagneten des Stellorgans und den Magneten des Einstellschlüssels erreicht wird, sondern auch dafür gesorgt werden, dass der Magnetabstand zwischen den Magneten des Stellorgans und des Einstellschlüssels in der Verriegelungsstellung ein Wirken des Magnetfelds und ein daraus folgendes Bringen des Blockierelements in die Entriegelungsstellung ermöglicht.

Vorteilhafterweise wird das Stellorgan auf einem Ausgleichsfuß gelagert. Damit kann das Stellorgan eine Neigung einnehmen und so auf unebenen Böden eine senkrechte Position einnehmen. Zudem kann der Ausgleichsfuß eine Schalldämmung ermöglichen, d.h. die Schallverbindung von dem Abstandselement, bzw. einer ggfs. an den Montagelementen angebrachten Platte und dem Untergrund zu ermöglichen. Diese Entkopplung kann auch durch ein am Ausgleichsfuß angebrachtes Entkopplungselement aus einem geeigneten Material wie beispielsweise Filz, Gummi, Schaum usw. erfolgen.

Die beschriebene Vorrichtung kann in jeglichen Bereichen verwendet werden, die kontaktlos verstellbare Elemente erfordern. Insbesondere kann ein höhenverstellbares Bodenelement für eine Feuchtraumeinrichtung, vorzugsweise eine Bodenplatte einer Duschwanne, zumindest eine oben beschriebene Vorrichtung zur Höhenverstellung aufweisen, wobei die Höhe des zwischen Einstellschlüssel und Mitnehmer angebrachten Bodenelements durch Drehung des Einstellschlüssels verstellbar ist. Damit wird es ermöglicht, die Höhe des Bodenelements unter Verwendung eines Einstellschlüssels einzustellen, ohne dass sichtbare Spalten, Ritzen, etc. durch Schrauben oder dergleichen sichtbar sind. Auch ist es möglich die Neigung des Bodenelements einzustellen, beispielsweise durch Verwendung mehrerer Vorrichtungen zur Höhenverstellung an mehreren Punkten des Bodenelements, vorzugsweise an den Ecken. Natürlich könnte auch eine Seite des Bodenelements gelagert sein und auf der gegenüberliegenden Seite des Bodenelements Vorrichtungen zur Höhenverstellung angebracht sein, um die Neigung des Bodenelements zu justieren. Natürlich sollte bei der Justierung kein großer Druck auf dem Bodenelement lasten, damit eine kontaktlose Verstellung der Länge des Abstandselements ermöglicht wird. Insbesondere eine Ausgestaltung des Blockierelement durch auf dem Drehelement in radialer Richtung verlaufende Sägezähne mit in zweiter Richtung steigenden Flanken kann bei Verwendung bei einem Bodenelement vorteilhaft sein. So kann nach der Montage das in Verriegelungsposition befindliche Blockierelement insbesondere ein Verkürzen des Montageelements und damit ein Absenken des Bodenelements verhindert werden.

Um eine Positionierung des Einstellschlüssels an ein in der Regel von außen nicht sichtbares Stellorgan zu erleichtern, können Schablonen vorgesehen werden. Die Schablone dient somit zum Positionieren des Einstellschlüssels, wobei zwischen Stellorgan und Einstellschlüssel eine Platte vorgesehen ist. Diese weist eine Ausnehmung und Positioniermittel auf. Die Schablone ist derart ausgestaltet, dass bei Positionierung der Schablone auf der Platte und des Einstellschlüssels in der Ausnehmung, durch ein Zusammenwirken der Positioniermittel und der Platte sich der Einstellschlüssel an der Position des Stellorgans auf der gegenüberliegenden Seite der Platte befindet. Die Positioniermittel können beispielsweise durch den Rand der Schablone gegeben sein. Das Zusammenwirken des Rands der Schablone mit der Platte kann durch Schieben des Randes der Schablone an den Rand der Platte erfolgen. Alternativ kann auch eine z.B. optische Markierung auf oder an der Platte angebracht sein, womit eine Positionierung der Schablone oder auch des Einstellschlüssels selbst ermöglicht wird. Die Schablone und/oder der Einstellschlüssel können vorteilhafterweise sowohl von der Platte abnehmbar, als auch fest mit der Platte verbunden sein. Es kann der Einstellschlüssel natürlich auch über die Bodenplatte bewegt werden, bis die Magneten des Einstellschlüssels mit den Gegenmagneten des Drehelements ein magnetisches Feld aufbauen und der Einstellschlüssel sozusagen einrastet.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine Explosionsdarstellung einer Ausführungsform der Vorrichtung,
Fig.2a, b einen Querschnitt/Schrägriss einer Ausführungsform der Vorrichtung ohne Einstellschlüssel in Verriegelungsposition,
Fig.3a, b einen Querschnitt/Schrägriss einer Ausführungsform der Vorrichtung mit Einstellschlüssel in Entriegelungsposition,
Fig.4 eine montierte erfindungsgemäße Vorrichtung,
Fig.5 eine Duschwanne mit vier erfindungsgemäßen Vorrichtungen.

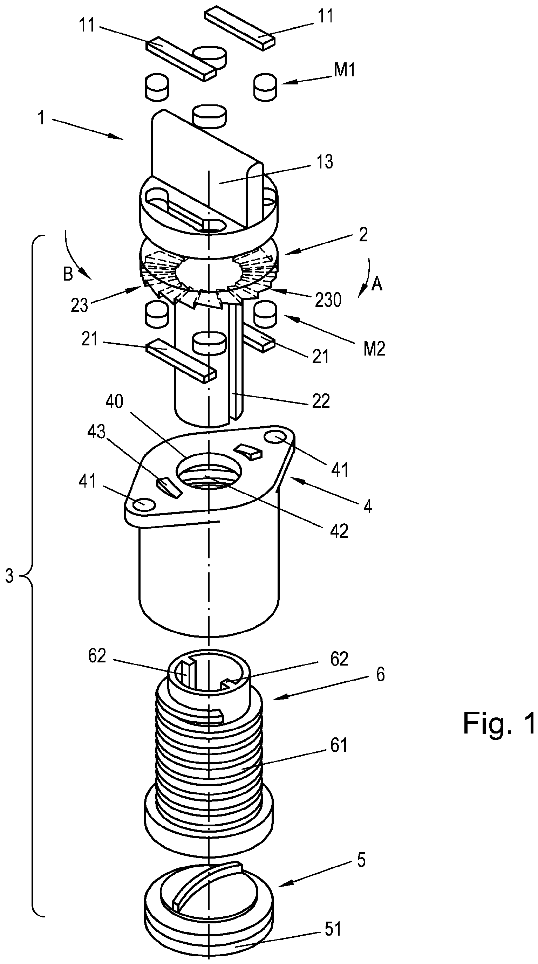

Fig.1 zeigt eine Ausgestaltung einer bevorzugten Ausführungsform der erfindungsgemäßen Vorrichtung 10. Ein Einstellschlüssel 1 ist mit vier Magneten M1 versehen, wobei die Magnete M1 vorteilhafterweise als Neodym-Magnete ausgeführt sind. Die Magnete M1 können beispielsweise in eine im Einstellschlüssel 1 vorgesehene Ausnehmung eingelegt, eingeklebt oder auch in den Einstellschlüssel 1 eingegossen sein. Der Einstellschlüssel 1 kann dabei über ein Griffstück verfügen, das beispielsweise zur Gänze oder zum Teil aus Kunststoff gefertigt sein kann. Durch das Griffstück ist eine einfachere Drehung des Einstellschlüssels 1 möglich. Zur Verstärkung des magnetischen Felds der Magnete M1 kann entlang jeweils mindestens zweier Magnete M1 eine Verstärkungsbrücke 11 aus ferromagnetischem Material angebracht sein. In dieser Ausführung ist jeweils eine Verstärkungsbrücke 11 für ein Paar an Magneten M1 vorgesehen, die ein magnetisches Joch ausbildet.

Weiteres ist ein Abstandselement 3 vorgesehen, das aus einem Drehelement 2, einer Gewindehülse 4, einem Stellorgan 6 und gegebenenfalls einem Ausgleichsfuß 5 besteht. Das Drehelement 2 weist ebenso ein Paar an Gegenmagneten M2 auf. Eine Drehbewegung des Einstellschlüssels 1 wird über die magnetische Kopplung zwischen den Magneten M1 des Einstellschlüssels 1 und Gegenmagneten M2 des Drehelements 2 übertragen, womit das Drehelement 2 einen Mitnehmer darstellt. Dazu müssen die Magnete M1 und Gegenmagnete M2 natürlich in geeigneter Weise im Einstellschlüssel 1 und im Drehelement 2 positioniert sein.

Die Gewindehülse 4 weist auf der dem Einstellschlüssel 1 zugewandten Seite eine Öffnung 40 auf in die das Drehelement 2 eingeführt werden kann. Weiters ist die Gewindehülse 4 mit einem Innengewinde 42, sowie Montageelementen 41 versehen. Das Stellorgan 6 weist ein auf das Innengewinde 42 abgestimmtes Außengewinde 61 auf. Dadurch ist die Länge des Stellorgans 6 samt aufgeschraubter Gewindehülse 4 über die Gewindestellung verstellbar, womit auch die Länge d des Abstandselements 3 verstellbar ist. Um die Gewindestellung zu ändern, wird das Stellorgan 6 verdreht, was durch Übertragung der Drehbewegung vom Einstellschlüssel 1 auf das Drehelement 2 und in weiterer Folge vom Drehelement 2 auf das Stellorgan 6 erfolgt. Diese Übertragung der Drehbewegung vom Drehelement 2 auf das Stellorgan erfolgt vorteilhafterweise über eine formschlüssige Verbindung, hier über eine Nut 22 am Drehelement 2 und einer passenden, in die Nut 22 eingeführten, Feder 62 am Stellorgan 6. Natürlich könnte sich die Nut 22 auch am Stellorgan 6 und die Feder 62 am Drehelement 2 befinden oder eine andere Art einer formschlüssigen Verbindung, wie z.B. einer profilierten Welle/Nabe oder dergleichen vorgesehen sein. Die formschlüssige Verbindung soll hier natürlich eine Relativbewegung zwischen Stellorgan 6 und Drehelement 2 ermöglichen.

Durch Verdrehen des Stellorgans 6 mit dem Drehelement 2 in eine erste Richtung A wird die Länge d des Abstandselements 3 in Richtung der axialen Drehachse vergrößert. Analog wird durch Verdrehen des Stellorgans 6 mit dem Drehelement 2 in eine zweite Richtung B die Länge des Abstandselements 3 in Richtung der axialen Drehachse verringert. Die Drehachse ist in den Figuren strichpunktiert eingezeichnet

Erfindungsgemäß ist im Abstandselement 3 ein Blockierelement 23 vorgesehen, das von einer Verriegelungsstellung V in eine Entriegelungsstellung E bringbar ist, wobei in der Verriegelungsstellung V ein Verdrehen des Stellorgans 6 in die zweite Richtung B und/oder in die erste Richtung A verhindert ist und in der Entriegelungsstellung E ein Verdrehen des Stellorgans 6 in die zweite Richtung B und/oder die erste Richtung A ermöglicht ist.

In der dargestellten Ausführungsform ist das Blockierelement 23 durch auf dem Drehelement 2 in radialer Richtung verlaufende axiale Vertiefungen bzw. Erhöhungen (hier auf dem Drehelement 2 in radialer Richtung verlaufende Sägezähne mit in zweiter Richtung B steigenden Flanken 230) ausgebildet, um in der Verriegelungsstellung V das Verdrehen des Stellorgans 6 in eine Richtung (hier die zweite Richtung B) zu verhindern. Das Blockierelement 23 steht dazu in der Verriegelungsstellung V mit dem Eingriffselement 43 (hier zwei in erster Richtung A steigende, axial vorstehendes Rampenelemente, die hier diametral an der Gewindehülse 4 vorgesehen ist) in Eingriff. Damit wird in dieser Ausführung in der Verriegelungsstellung V durch das Sperren der zweiten Richtung B ein Verkürzen der Länge d des Abstandselements 3 verhindert. Das Eingriffselement 43 kann natürlich auch in anderen Formen ausgestaltet sein, beispielsweise in rechteckiger Form oder als Trapez. Das Eingriffselement 43 muss dabei natürlich immer derart ausgestaltet sein, dass es in geeigneter Weise mit dem Blockierelement 23 zusammenwirken kann.

Das Blockierelement 23 kann durch das Einwirken einer axialen Kraft F auf das Drehelement 2 in die Verriegelungsstellung V gebracht werden und durch das Einwirken einer axialen, der Kraft F entgegen wirkenden, Gegenkraft F' in die Entriegelungsstellung E gebracht werden. Die Gegenkraft F' muss dabei natürlich größer der Kraft F sein, wenn die beiden Kräfte gleichzeitig wirken. In der dargestellten Ausführungsform dient die Erdgraviation als Kraft F, wobei die Gegenkraft F' durch das Magnetfeld zwischen dem zumindest einen Magnet M1 und dem zumindest einen Gegenmagnet M2 erzeugt wird. Wird der Einstellschlüssel 1 zum Einstellen des Abstandselements 3 aufgesetzt, wirken der Magnet M1 und der Gegenmagnet M2 zusammen und erzeugen damit die Gegenkraft F', mit der das Drehelement 2 abgehoben wird und die Entriegelungsstellung E gebracht wird. Somit kann bei aufgesetztem Einstellschlüssel 1 das Abstandselement 3 verstellt werden. Nach dem Verstellen wird der Einstellschlüssel 1 entfernt, womit die Gegenkraft F' verschwindet und die wirkende Kraft F (hier die Erdgravitation) das Drehelement 2 in die Verriegelungsstellung V bringt. Eine weitere Verstellung des Abstandselements 3 ist damit nicht mehr möglich. Damit ist das Drehelement 2 durch Einwirken der Kraft F bzw. Gegenkraft F' axial bewegbar um das Blockierelement 23 in die Verriegelungsstellung V bzw. Entriegelungsstellung E zu bringen. Damit kann durch das Zusammenwirken des Abstandselements 3 und des Einstellschlüssels 1 auch eine automatische Entriegelung bzw. Verriegelung bei Verwendung des Abstandselements 3 realisiert werden, was für die Funktion des Abstandselements 3 besonders vorteilhaft ist.

Die auf der dem Einstellschlüssel 1 abgewandten Seite des Stellorgans 6 angebrachten Ausgleichsfuß 5 dient dazu das Abstandselement 3 zu lagern, um eine senkrechte Position des Abstandselements 6 auf nicht waagrechtem Boden zu ermöglichen, wobei der Ausgleichsfuß 5 optional ist. Um eine Entkopplung der Schallverbindung vom Abstandselement 3, bzw. einer an den Montageelementen 41 angebrachten Platte 9 zum darunter befindlichen Untergrund, zu ermöglichen kann der Ausgleichsfuß 5 auch mit einem Entkopplungselement 51 aus Filz, Gummi, Schaum, usw. beschichtet werden, oder auch gänzlich aus einem derartigen Material gefertigt sein.

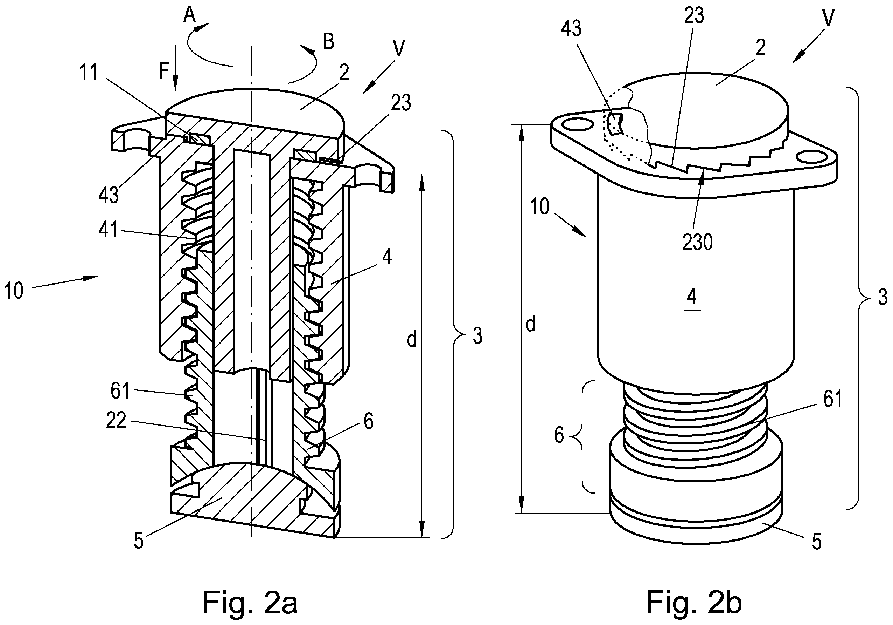

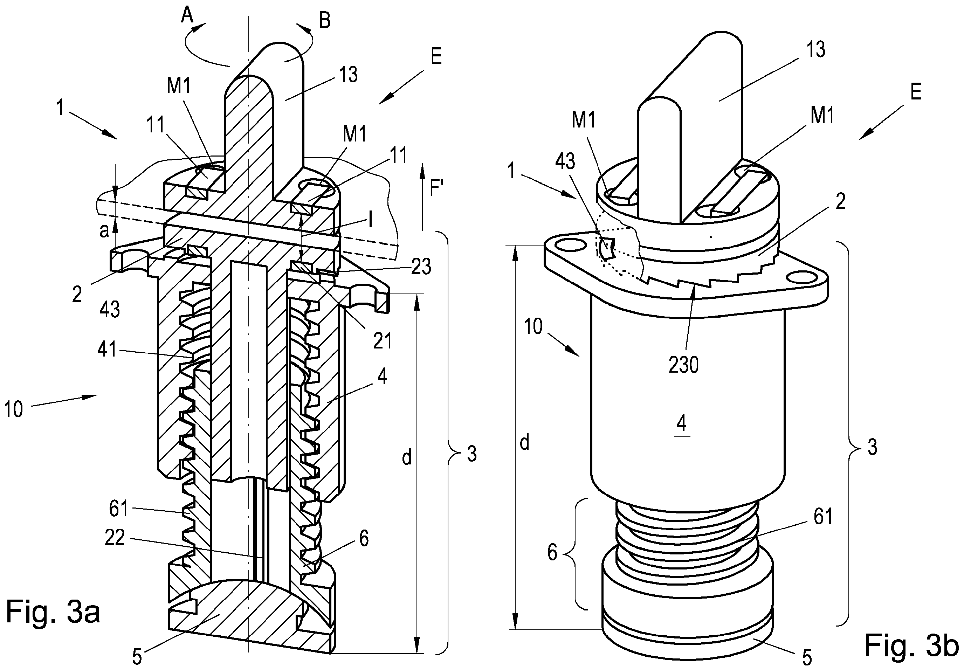

Fig.2 a und b zeigen einen Querschnitt, bzw. einen Schrägriss der Vorrichtung 10 mit dem Blockierelement 23 in der Verriegelungsposition V. Das Abstandselement 3 weist in Richtung der strichpunktierten Drehachse eine veränderbare Länge d auf. Der Einstellschlüssel 1 (nicht eingezeichnet) ist nicht am Abstandselement 3 angelegt oder zumindest derart weit entfernt, dass ein Magnetabstand I zwischen den Magneten M1 und den Gegenmagneten M2 derart groß ist, dass kein ausreichendes Magnetfeld vorherrscht, um das Blockierelement 23, welches hier am Drehelement 2 angebracht ist, in die Entriegelungsposition E zu bringen. Die Gegenmagnete M2 des Drehelements 2 sind in dieser Darstellung nicht sichtbar, wohl aber die Verstärkungsbrücken 11. Das Blockierelement 23 (hier in Form von Sägezähnen mit in zweiter Richtung B Richtung steigenden Flanken 230) steht in der vorherrschenden Verriegelungsposition V mit dem Eingriffselement 43 (in Fig. 2a, b, wie auch in Fig. 3a, b der Übersicht halber nur eine in erster Richtung A steigende Rampe dargestellt) in Eingriff und verhindert ein Drehen des Stellorgans 2 hier in die erste Richtung A. Dies ist der Fall, da die Erdgravitation als Kraft F auf das Stellorgan 2 wirkt. Eine Drehbewegung des Drehelements 2 in die erste Richtung A könnte ansonsten auch ohne Anbringen des Einstellschlüssels 1 über die formschlüssige Verbindung, z.B. in Form einer Nut 22 und einer Feder 62 (letztere hier nicht sichtbar), auf das Stellorgan 6 übertragen werden, womit die Länge d des Abstandselements 3 geändert wird. Eine Drehung des Stellorgans 2 in die zweite Richtung B wäre in dieser Ausgestaltung eher möglich, wobei Stellorgan 2 und Gewindehülse 4 wie eine Ratsche wirken. Um eine Drehung in die zweite Richtung B zu blockieren und stattdessen eine Drehung in die erste Richtung zu ermöglichen, wäre die Orientierung der sägezahnartigen Blockierelemente 23 und des rampenförmigen Eingriffselements 43 umzukehren. Um eine Drehung in beide Richtungen A und B zu verhindern, wären beispielsweise Blockierelemente 23 als rechteckige radiale Ausnehmungen, ggf. mit trapezförmig abgeschrägten Seiten, am Stellorgan 2 mit einem passenden Eingriffselement 43 vorstellbar.

Fig.3a und b zeigt einen Querschnitt bzw. einen Schrägriss der Vorrichtung 10 in Entriegelungsposition E. Der Einstellschlüssel 1 ist hier in einem Abstand a vom Drehelement 2 positioniert, wobei der in der Regel konstante Abstand a durch eine Platte 9 (hier nur angedeutet) verursacht wird. Die Gegenmagnete M2 des Drehelements 2 sind in dieser Darstellung nicht sichtbar, wohl aber die Verstärkungsbrücken 21. Durch das Wirken der Magnetkraft als Gegenkraft F' zwischen den Magneten M1 und den Gegenmagneten M2, wird das Stellorgan 2 in Richtung des Einstellschlüssels 1 gezogen. Die Magnete M1 des Einstellschlüssels 1 sind in dieser Entriegelungsposition E in einem Magnetabstand I von den Gegenmagneten M2 des Drehelements 2 positioniert. Dieser Magnetabstand I ergibt sich durch die bauliche Beschaffenheit des Einstellschlüssels 1 und des Drehelements 2, d.h. der Positionierung der Magnete M1 und Gegenmagnete M2, sowie den Abstand a des Einstellschlüssels 1 vom Drehelement 2, bzw. Abstandselement 3. Natürlich sind die Magnete M1 des Einstellschlüssels 1, bzw. die Gegenmagnete M2 des Drehelements 2 vorteilhafterweise so anzubringen, um den Magnetabstand I gering zu halten, idealerweise direkt am Rand des Einstellschlüssels bzw. des Drehelements 2, womit der Magnetabstand I in etwa dem Abstand a entspricht. Bei Verwendung von Neodyn-Magneten ist bei je vier Magneten M1 im Einstellschlüssel 1 und vier Gegenmagneten M2 am Drehelement 2 ein Magnetabstand I von maximal 5 mm vorzusehen, um eine Übertragung der Drehbewegung zu ermöglichen. Bei stärkeren oder einer größeren Anzahl an Magneten M1, M2 kann der Abstand auch vergrößert werden. Da das Blockierelement 23 nicht mit dem Eingriffselement 43 in Eingriff steht, kann eine Drehbewegung des Einstellschlüssels 1 also von den Magneten M1 des Einstellschlüssels 1 auf die Magnete M2 des Drehelements 2 übertragen werden. Die dadurch entstehende Drehbewegung des Drehelements 2 wird wiederum über die formschlüssige Verbindung, z.B. in Form einer Nut 22 und einer Feder 62 (hier nicht sichtbar), auf das Stellorgan 6 übertragen. Da das Stellorgan 6 ein Außengewinde 61 aufweist, auf das eine Gewindehülse 4 mit einem Innengewinde 41 geschraubt ist, wird durch die Drehbewegung des Stellorgans 6 die Ausdehnung des Stellorgans 6 und der Gewindehülse 4 geändert, womit sich auch die Länge d des Abstandselements 3, das ja u.a. das Stellorgan 6 und die Gewindehülse 4 beinhaltet, ändert. Dabei bleibt aber der Abstand a, sowie der Magnetabstand I konstant, d.h. die Wirkung der Magnete M1 und Gegenmagnete M2 ist über den ganzen Stellbereich gleich.

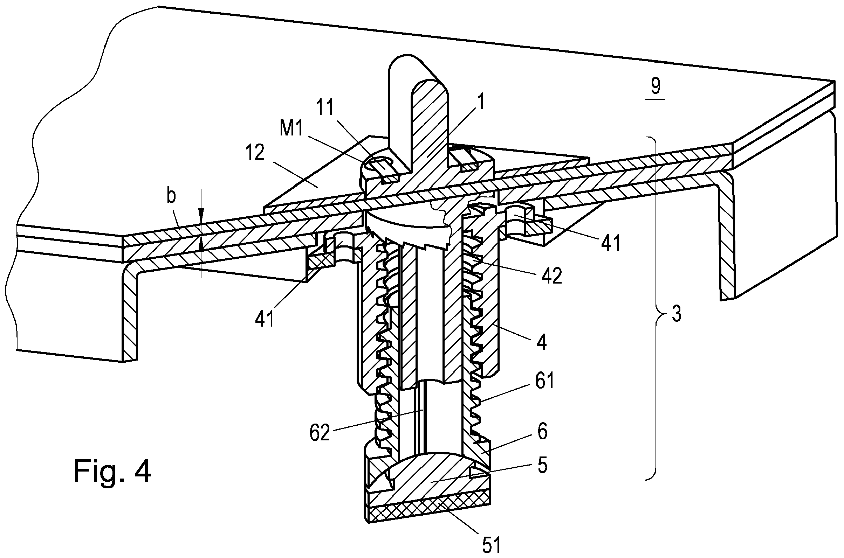

Fig.4 zeigt ein montiertes Abstandselement 3, wobei die Gewindehülse 4 über Montageelemente 41 mit einer Platte 9 verbunden ist. Die Platte 9 befindet sich somit zwischen dem Abstandselement 3 und dem Einstellschlüssel 1. Die Dicke der Platte 9 bestimmt somit den Abstand a von Einstellschlüssel 1 und Abstandselement 3, womit in weiterer Folge der Magnetabstand I bestimmt wird (neben der Positionierung der Magnete M1 im Einstellschlüssel 1 und der Gegenmagnete im Abstandshalter 3). Die durch den Einstellschlüssel 1 auf den Abstandshalter 3 übertragene Drehbewegung ändert wie oben beschrieben die Länge d des Abstandshalters, wodurch die Höhe der Platte 9 eingestellt werden kann. Ebenso ist in der Fig.3 eine Schablone 12 zur Positionierung des Einstellschlüssels 1 an der Position des Stellorgans 6 auf der gegenüberliegenden Seite der Platte 9 dargestellt. Dabei weist die Schablone 12 eine Ausnehmung für die Positionierung des Einstellschlüssel 1 auf, der Schablonenrand dient als Positioniermittel. Bei Positionierung der Schablone 12 auf der Platte 9 und des Einstellschlüssels 1 in der Ausnehmung, wird der Einstellschlüssel 1 durch ein Zusammenwirken der Positioniermittel (also des Randes der Schablone) und der Platte 9 an die gewünschte Position gebracht. Das Zusammenwirken der Positioniermittel und der Platte 9 erfolgt in diesem Fall durch ein bündiges Anlegen des Positioniermittels (des Rands der Schablone) an den Rand der Platte 9.

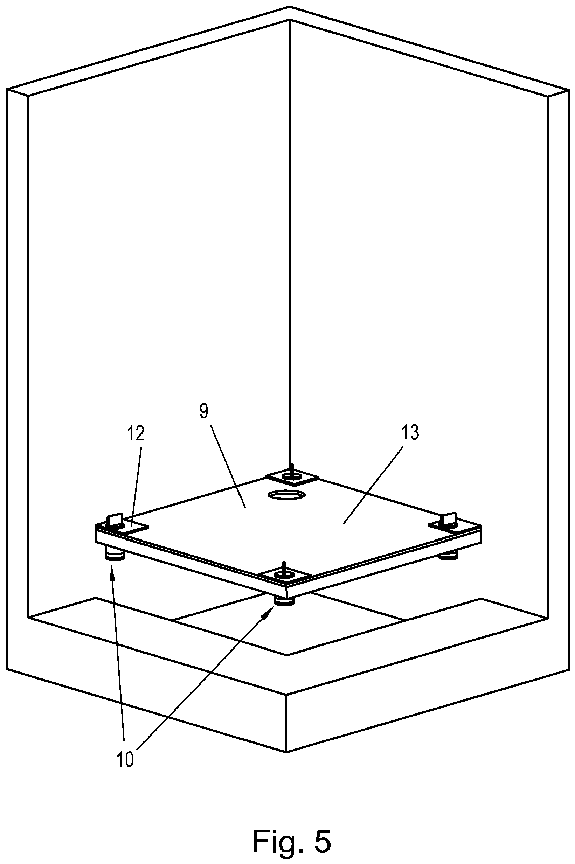

Fig.5 zeigt eine Duschwanne mit einem Bodenelement 13, das aus einer (Boden)Platte 9 und vier erfindungsgemäßen Vorrichtungen 10 an den Ecken der Platte 9 besteht. Durch vier Abstandselemente 3 und Einstellschlüssel 1, wobei letztere mittels Schablonen 21 in die korrekte Position gebracht werden, ist eine Verstellung der Höhe der Platte 9 an vier Punkten möglich, womit innerhalb des Verstellbereichs der Länge d der Vorrichtung 10 jede beliebige Neigung der Platte 9 eingestellt werden kann, ohne die Platte 9 zu entfernen. Dabei werden jegliche Spalten, Ritzen, etc. durch sichtbare Schrauben vermieden, was der Hygiene, gerade in Nassebereichen zuträglich ist, da sich kein Schmutz und keine Bakterien in diesen Spalten, Ritzen, etc. sammeln können. Zudem ist damit eine Dichtheit des Bodenelements gewährleistet.

Um ein selbstständiges, bzw. ungewolltes, Verstellen des Abstandelements 3 zusätzlich zu verhindern, kann das Gewinde bestehend aus Innengewinde 42 und Außengewinde 61 vorzugsweise selbsthemmend ausgeführt sein. Das bedeutet, dass die Reibung innerhalb des Gewindes so hoch ist, dass dieses nicht durch äußere Belastung des Abstandselements 3, bzw. eines Bodenelements 13, z.B. durch ein Draufsteigen eines Benutzers in Drehung kommt und damit die Länge d der Vorrichtung 10 verstellt. Damit würde ggf. das Bodenelement 13 die voreingestellte und gewünschte Position verändert, also absenken. Diese Reibung im Gewinde kann z.B. durch eine geringe Gewindesteigung oder durch große Flankenflächen des Gewindes, wie z.B. bei einem Trapezgewinde, wie in den Figuren beispielhaft dargestellt, erzielt werden. Auch kann eine zusätzliche Reibung zwischen Gewindehülse 4 und Stellorgan 6 erzeugt werden, oder aber z.B. ein flüssiger Schraubensicherungskleber im Gewinde aufgetragen werden. Dieser Schraubensicherungskleber muss vor der Montage vom Monteur aufgebracht werden und verklebt nach einer definierten Zeit das Innengewinde 41 mit Außengewinde 61.

Der Ausgleichsfuß 5 kann eine formschlüssige Verbindung, z.B. über einen Steg wie in Fig. 1 dargestellt, mit dem Stellorgan 6 aufweisen - wobei natürlich das Stellorgan 6 eine passende Ausnehmung aufweisen muss -, sodass sich der Ausgleichsfuß 5 mit dem Stellorgan 6 dreht. Damit kann eine unerwünschte Verstellung der Länge d der Vorrichtung 10 verhindert werden, da das Stellorgan 6 nur verdreht werden kann, wenn sich der Ausgleichsfuß 5 mit dreht, was bei Belastung des Abstandselements 3 aufgrund der Reibung zwischen dem Ausgleichsfuß 5 mit dem Untergrund auszuschließen ist.

## Patentansprüche

1. Vorrichtung zur Verstellung der Länge (d) eines Abstandselements (3) aufweisend einen Einstellschlüssel (1) und ein Drehelement (2), wobei der Einstellschlüssel (1) zumindest einen Magnet aufweist (M1) und das Drehelement (2) zumindest einen Gegenmagnet (M2) aufweist, wobei der zumindest eine Magnet (M1) und der zumindest eine Gegenmagnet (M2) angeordnet sind um die Übertragung der Drehbewegung des Einstellschlüssels (1) auf das Drehelement (2) durch das Zusammenwirken des Magnets (M1) und des Gegenmagnets (M2) zu ermöglichen, und wobei das Drehelement (2) als Mitnehmer für ein Stellorgan (6) des Abstandselements (3) ausgebildet ist, wobei durch Verdrehen des Stellorgans (6) mit dem Drehelement (2) in eine erste Richtung (A) die Länge (d) des Abstandselements (3) in Richtung der axialen Drehachse vergrößerbar ist und durch Verdrehen des Stellorgans (6) mit dem Drehelement (2) in eine zweite Richtung (B) die Länge (d) des Abstandselements (3) in Richtung der axialen Drehachse verringerbar ist, **dadurch gekennzeichnet, dass** im Abstandselement (3) ein Blockierelement (23) vorgesehen ist, das von einer Verriegelungsstellung (V) in eine Entriegelungsstellung (E) bringbar ist, wobei in der Verriegelungsstellung (V) ein Verdrehen des Stellorgans (6) in die zweite Richtung (B) und/oder die erste Richtung (A) verhindert ist und in der Entriegelungsstellung (E) ein Verdrehen des Stellorgans (6) in die zweite Richtung (B) und/oder die erste Richtung (A) ermöglicht ist.

2. Vorrichtung nach Anspruch 1, **dadurch gekennzeichnet, dass** das Drehelement (2) über eine formschlüssige Verbindung mit dem Stellorgan (6), vorzugsweise als axiale Nut (22) und zugehörige axiale Feder (62), verbunden ist.

3. Vorrichtung nach Anspruch 2, **dadurch gekennzeichnet, dass** das Blockierelement (23) durch auf dem Drehelement (2) in radialer Richtung verlaufende Vertiefungen und/oder Erhöhungen ausgeführt ist und dass am Abstandselement (3) ein Eingriffselement (43) vorgesehen ist, wobei das Blockierelement (23) in der Verriegelungsstellung (V) mit dem Eingriffselement (43) in Eingriff steht.

4. Vorrichtung nach Anspruch 1 bis 3, **dadurch gekennzeichnet, dass** das Abstandselement (3) eine Gewindehülse (4) mit einem Innengewinde (42) aufweist, die auf ein Außengewinde (61) des Stellorgans (6) aufgeschraubt ist **und dass** die Gewindestellung von Innengewinde (42) und Außengewinde (61) die Länge (d) des Abstandselements (3) ändert.

5. Vorrichtung nach Anspruch 4, **dadurch gekennzeichnet, dass** das das Eingriffselement (43) an der Gewindehülse angebracht ist.

6. Vorrichtung nach Anspruch 4 oder 5, **dadurch gekennzeichnet, dass** die Gewindehülse (4) auf einer dem Einstellschlüssel (1) zugewandten Oberseite eine Öffnung (40) aufweist, in die das Drehelement (2) eingeführt ist.

7. Vorrichtung nach Anspruch 4 oder 5, **dadurch gekennzeichnet, dass** das Blockierelement (23) durch auf dem Drehelement (2) in radialer Richtung verlaufende Sägezähne mit in tangentialer Richtung steigenden Flanken (230) gebildet ist.

8. Vorrichtung nach Anspruch 7, **dadurch gekennzeichnet, dass** die Flanken (230) der Sägezähne in zweiter Richtung (B) steigend ausgebildet sind, um in der Verriegelungsstellung (V) das Verdrehen des Stellorgans (6) in die erste Richtung (A) zu verhindern.

9. Vorrichtung nach einem der Ansprüche 1 bis 7, **dadurch gekennzeichnet, dass** das Blockierelement (23) im Abstandselement (1) durch das Einwirken einer axialen Kraft (F) auf das Drehelement (2) in die Verriegelungsstellung (V) gebracht werden kann und durch das Einwirken einer axialen, der Kraft (F) entgegen wirkenden, Gegenkraft (F') in die Entriegelungsstellung (E) gebracht werden kann.

10. Vorrichtung nach Anspruch 9, **dadurch gekennzeichnet, dass** die Erdgraviation als Kraft (F) dient und die Gegenkraft (F') durch ein Magnetfeld zwischen dem zumindest einen Magnet (M1) und dem zumindest einen Gegenmagnet (M2) erzeugt wird.

11. Vorrichtung nach einem der Ansprüche 9 oder 10, **dadurch gekennzeichnet, dass** das Drehelement (2) durch Einwirken der Kraft (F) bzw. Gegenkraft (F') axial bewegbar ist, um das Blockierelement (23) in die Verriegelungsstellung (V) bzw. Entriegelungsstellung (E) zu bringen.

12. Vorrichtung nach einem der Ansprüche 4 bis 11, **dadurch gekennzeichnet, dass** die Gewindehülse (4) zumindest ein Montageelement (41) aufweist, an das eine in der Höhe zu verstellende Platte (9) anbringbar ist, sodass die Platte (9) zwischen Gewindehülse (4) und Einstellschlüssel (1) angeordnet ist.

13. Vorrichtung nach Anspruch 12, **dadurch gekennzeichnet, dass** die Platte (9) durch eine Plattendicke (b) einen konstanten Abstand (a) zwischen dem Einstellschlüssel (1) und der Gewindehülse bewirkt, wobei der Einstellschlüssel (1) von der Platte (9) abnehmbar ist.

14. Höhenverstellbares Bodenelement (13), vorzugsweise eine Bodenplatte einer Duschwanne, mit zumindest einer Vorrichtung (10) nach einem der Ansprüche 1 bis 13, wobei die Position des zwischen Einstellschlüssel (1) und Drehelement (2) angebrachten Bodenelements (13) durch Drehung des Einstellschlüssels (1) verstellbar ist.

15. Schablone (12) für eine Vorrichtung (10) nach einem der Ansprüche 1 bis 13 zum Positionieren des Einstellschlüssels (1), wobei zwischen Stellorgan (6) und Einstellschlüssel (1) eine Platte (9) vorgesehen ist, wobei die Schablone (12) eine Ausnehmung für die Positionierung des Einstellschlüssels (1) und Positioniermittel aufweist und ausgestaltet ist, dass bei Positionierung der Schablone (12) auf der Platte (9) und des Einstellschlüssels (1) in der Ausnehmung, durch ein Zusammenwirken der Positioniermittel und der Platte (9) sich der Einstellschlüssel (1) an der Position des Stellorgans (6) auf der gegenüberliegenden Seite der Platte (9) befindet, wobei die Schablone (12) vorzugsweise von der Platte (9) abnehmbar ist.
